(19) Europäisches Patentamt
European Patent Office
Office européen des brevets

(11) **EP 2 894 502 A1**

(12) **EUROPEAN PATENT APPLICATION**

(43) Date of publication:
**15.07.2015 Bulletin 2015/29**

(51) Int Cl.:
**G02B 13/00** (2006.01)   G02B 9/34 (2006.01)
**G02B 13/18** (2006.01)

(21) Application number: **14150423.3**

(22) Date of filing: **08.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Ability Opto-Electronics Technology Co., Ltd.**
**42881 Taichung City (TW)**

(72) Inventors:
• Liao, Kuo-Yu
  **42881 Taichung City (TW)**
• Yang, Chao-Hsiang
  **42881 Taichung City (TW)**

(74) Representative: **Stöckeler, Ferdinand et al**
**Schoppe, Zimmermann, Stöckeler Zinkler, Schenk & Partner mbB**
**Patentanwälte**
**Radlkoferstrasse 2**
**81373 München (DE)**

(54) **Lens system**

(57)     A lens system includes a lens set (500) which includes a first lens (510), a second lens (520), a third lens (530) and a fourth lens (540) arranged in sequence along an optical axis (L). The first lens (510) has a positive optical power adjacent to the optical axis (L), and has a concave image-side surface (512) adjacent to the optical axis (L). The second lens (520) has a negative optical power adjacent to the optical axis (L), and has a convex image-side surface (522) adjacent to the optical axis (L). The third lens (530) has a positive optical power adjacent to the optical axis (L), and has a concave object-side surface (531) adjacent to the optical axis (L). The fourth lens (540) has a convex object-side surface (541) adjacent to the optical axis (L), and a wavy-shaped image-side surface (542) having a concave section adjacent to the optical axis (L).

FIG.1

**Description**

The present invention relates to a lens system, more particularly to a lens system which has a relatively high resolving power by virtue of designated optical parameters of the lens system, such as radii of curvatures of lenses and interspaces therebetween.

A conventional lens system is an imaging lens assembly utilized in an electronic device, such as a mobile phone, a notebook computer or a webcam. Along with the continuous development of electronic devices which evolve toward miniaturization while having better performances, an image sensor of the aforementioned imaging lens assembly, such as a charge-coupled device (CCD) or complementary metal-oxide-semiconductor (CMOS) active pixel sensors, has constantly progressed in pixel counts, and a lens system is also desired to advance toward a trend of compact design and to have a higher resolving power. Therefore, a multi-piece imaging lens system, especially an imaging lens system including at least four pieces of lenses, that satisfies the needs for compact design and high resolving power is sought to be developed.

Therefore, an object of the present invention is to provide a four-piece lens system which has compact dimensions and has a relatively high resolving power.

Another obj ect of the present invention is to provide a lens system which has better imaging results while maintaining a small structure.

A further object of the present invention is to provide a lens system which is adapted to be utilized in a miniaturi zed camera assembly of an electronic device, such as a mobile phone, a smart phone, a personal computer camera (PC CAM), a portable computer and so forth.

Accordingly, the lens system of the present invention comprises a lens set and a constant-aperture diaphragm. The lens set includes a first lens, a second lens, a third lens and a fourth lens arranged in sequence from an object side to an image side of the lens system along an optical axis of the lens system. The first lens includes a portion which is adjacent to the optical axis and which has a positive optical power. The first lens has a first surface which is a curved surface facing the object side, and a second surface which is a curved surface facing the image side. A section of the second surface adj acent to the optical axis is a concave surface section. The second lens includes a portion which is adjacent to the optical axis and which has a negative optical power. The second lens has a third surface which is a curved surface facing the object side, and a fourth surface which is a curved surface facing the image side. A section of the fourth surface adjacent to the optical axis is a convex surface section. The third lens includes a portion which is adj acent to the optical axis and which has a positive optical power. The third lens has a fifth surface which is a curved surface facing the obj ect side, and a sixth surface which is a curved surface facing the image side. A section of the fifth surface adjacent to the optical axis is a concave surface section. The fourth lens has a seventh surface which is a curved surface facing the object side, and an eighth surface which is a curved surface facing the image side. A section of the seventh surface adjacent to the optical axis is a convex surface section. The eighth surface has a wavy shape. A section of the eighth surface adjacent to the optical axis is a concave surface section. The constant-aperture diaphragm is disposed between the object side and the image side.

Other features and advantages of the present invention will become apparent in the following detailed description of the three preferred embodiments with reference to the accompanying drawings, of which:

Figure 1 is a schematic diagram illustrating a first preferred embodiment of a lens system according to the present invention;
Figure 2 illustrates a distortion plot of the first preferred embodiment which has parameters shown in Table 1;
Figure 3 illustrates a field curvature plot of the first preferred embodiment which has the parameters shown in Table 1;
Figure 4 illustrates an aberration plot of the first preferred embodiment which has the parameters shown in Table 1;
Figure 5 is a schematic diagram illustrating a second preferred embodiment of the lens system according to the present invention;
Figure 6 illustrates a distortion plot of the second preferred embodiment;
Figure 7 illustrates a field curvature plot of the second preferred embodiment;
Figure 8 illustrates an aberration plot of the second preferred embodiment;
Figure 9 is a schematic diagram illustrating a third preferred embodiment of the lens system according to the present invention;
Figure 10 illustrates a distortion plot of the third preferred embodiment;
Figure 11 illustrates a field curvature plot of the third preferred embodiment; and
Figure 12 illustrates an aberration plot of the third preferred embodiment.

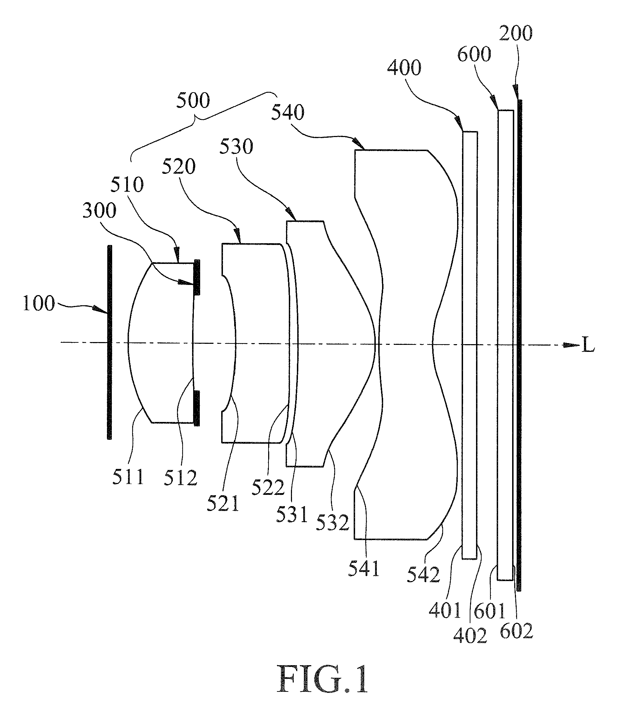

Referring to Figure 1, a schematic diagram of a first preferred embodiment of a lens system according to the present invention is provided. The lens system comprises a lens set 500. The lens system of the present invention has an object side 100 and an image side 200 opposite to the object side 100. The lens system at least includes a first lens

510, a second lens 520, a third lens 530 and a fourth lens 540 arranged in sequence from the object side 100 to the image side 200 of the lens system along an optical axis L of the lens system, such that light beams coming from the object side 100 pass through the lens set 500 to form an optical image at the image side 200.

The lens system of the present invention further comprises a constant-aperture diaphragm 300 which is disposed between the object side 100 and the image side 200.

Moreover, the lens system of the present invention further comprises a filter lens 400. The filter lens 400 is a bandpass filter optical lens, and is disposed between the fourth lens 540 and the image side 200 of the lens system. The lens system of the present invention further comprises a cover glass (C.G.) protective lens 600. The C.G. protective lens 600 is disposed between the filter lens 400 and the image side 200 of the lens system.

Therefore, according to the aforementioned lens system, the light beams coming from the object side 100 would pass through the lens set 500, the constant-aperture diaphragm 300, the filter lens 400 and the C.G. protective lens 600 to form the optical image at the image side 200.

In the lens set 500 of the lens system according to the present invention, the first lens 510 includes a portion which is adjacent to the optical axis L and which has a positive optical power. The first lens 510 has a first surface 511 which is a curved surface facing the object side 100, and a second surface 512 which is a curved surface facing the image side 200. A section of the second surface 512 adjacent to the optical axis L is a concave surface section. The second lens 520 includes a portion which is adjacent to the optical axis L and which has a negative optical power. The second lens 520 has a third surface 521 which is a curved surface facing the object side 100, and a fourth surface 522 which is a curved surface facing the image side 200. A section of the fourth surface 522 adjacent to the optical axis L is a convex surface section. The third lens 530 includes a portion which is adjacent to the optical axis L and which has a positive optical power. The third lens 530 has a fifth surface 531 which is a curved surface facing the object side 100, and a sixth surface 532 which is a curved surface facing the image side 200. A section of the fifth surface 531 adjacent to the optical axis L is a concave surface section. The fourth lens 540 has a seventh surface 541 which is a curved surface facing the object side 100, and an eighth surface 542 which is a curved surface facing the image side 200. A section of the seventh surface 541 adjacent to the optical axis L is a convex surface section. The eighth surface 542 has a wavy shape. A section of the eighth surface 542 adjacent to the optical axis L is a concave surface section. The filter lens 400 has a ninth surface 401 facing the object side 100 and a tenth surface 402 facing the image side 200. Moreover, the C.G. protective lens 600 has an eleventh surface 601 facing the object side 100 and a twelfth surface 602 facing the image side 200.

In the lens set 500 of the lens system according to the present invention, at least one of the first and second surfaces 511, 512 of the first lens 510 is an aspherical surface. At least one of the third and fourth surfaces 521, 522 of the second lens 520 is an aspherical surface. At least one of the fifth and sixth surfaces 531, 532 of the third lens 530 is an aspherical surface. At least one of the seventh and eighth surfaces 541, 542 of the fourth lens 540 is an aspherical surface.

Specifically, in the lens system according to the present invention, the constant-aperture diaphragm 300 is disposed between the first surface 511 of the first lens 510 and the object side 100, or between the first lens 510 and the second lens 520, or between the second lens 520 and the third lens 530, or between the third lens 530 and the fourth lens 540, or between the fourth lens 540 and the filter lens 400, or between the filter lens 400 and the image side 200, or on any one of the first to eighth surfaces 511-542 of a respective one of the first to fourth lenses 510-540.

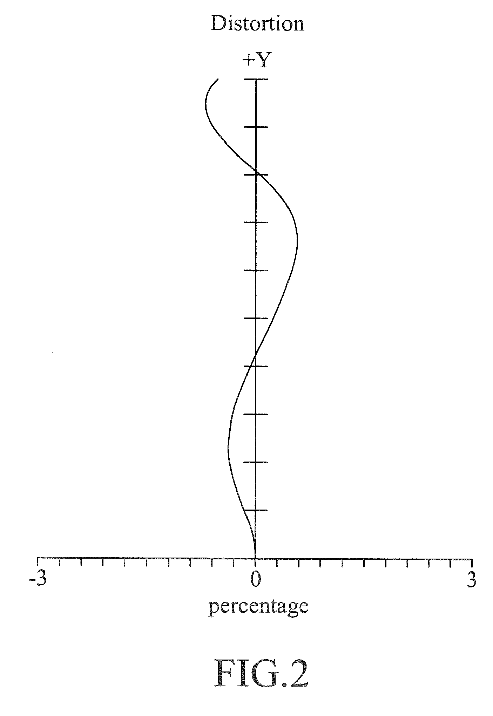

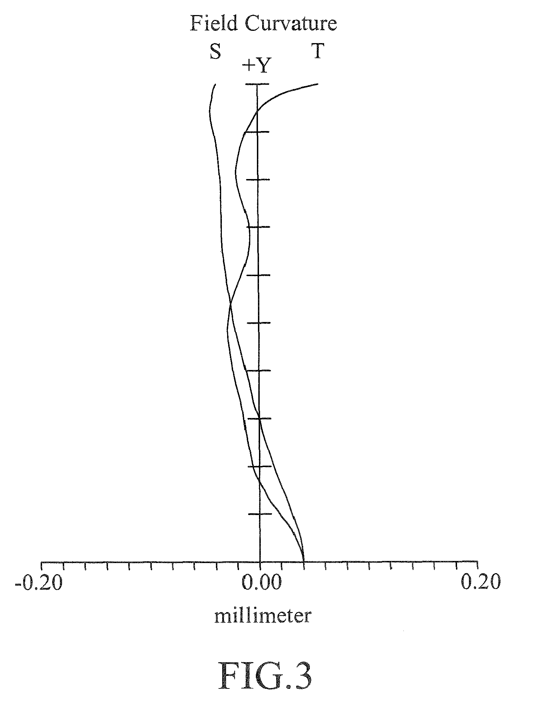

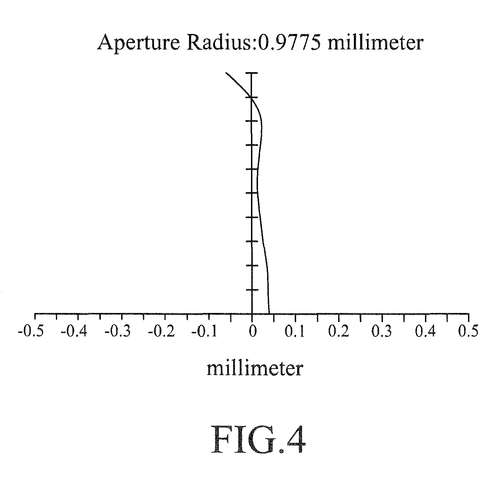

Table 1 below shows parameters of the first to fourth lenses 510 to 540 and relevant performance indexes of the first preferred embodiment of the lens system according to the present invention. Figure 2 illustrates a distortion plot of the first preferred embodiment. Figure 3 illustrates a field curvature plot of the first preferred embodiment. Figure 4 illustrates an aberration plot of the first preferred embodiment.

Referring to Table 1 in combination with Figure 1, in the first preferred embodiment of the lens system, the constant-aperture diaphragm 300 is disposed between the second surface 512 of the first lens 510 and the third surface 521 of the second lens 520. Aside from the aforementioned curvature properties of the second, fourth, fifth, seventh and eighth surfaces 512, 522, 531, 541 and 542, a section of the first surface 511 of the first lens 510 adjacent to the optical axis L is a convex surface section. A section of the third surface 521 of the second lens 520 adjacent to the optical axis L is a concave surface section. A section of the sixth surface 532 of the third lens 530 adjacent to the optical axis L is a convex surface section. Further, in the first preferred embodiment of the lens system, the parameters, such as a radius of curvature and a thickness of each of the first to twelfth surfaces 511 to 602, and a refractive index and an Abbe number of each of the first to fourth lenses 510 to 540, the filter lens 400 and the C.G. protective lens 600 are provided in the following Table 1.

Table 1

| Lens | Surface | Radius of Curvature | Thickness | Refractive Index | Abbe Number |
|---|---|---|---|---|---|
| First Lens (510) | 1st Surface (511) | 2.15 | 0.92 | 1.544100 | 56.093602 |
| | 2nd Surface (512) | 11.38 | 0.05 | | |
| Second Lens (520) | 3rd Surface (521) | -5.78 | 0.81 | 1.635500 | 23.891420 |
| | 4th Surface (522) | -50.92 | 0.12 | | |
| Third Lens (530) | 5th Surface (531) | -5.79 | 1.12 | 1.544100 | 56.093602 |
| | 6th Surface (531) | -1.12 | 0.12 | | |
| Fourth Lens (540) | 7th Surface (541) | 31.61 | 0.72 | 1.534611 | 56.072163 |
| | 8th Surface (542) | 1.20 | 0.44 | | |

| | | | | | |
|---|---|---|---|---|---|
| Filter Lens (400) | 9$^{th}$ Surface (401) | ∞ | 0.2 | 1.516800 | 64.167336 |
| | 10$^{th}$ Surface (401) | ∞ | 0.74 | | |
| C.G. Lens (600) | 11$^{th}$ Surface (601) | ∞ | 0.40 | 1.516800 | 64.167336 |
| | 12$^{th}$ Surface (602) | ∞ | 0.045 | | |

Each aspherical surface of this invention satisfies:

$$z = \frac{ch^2}{1+[1-(k+1)c^2h^2]^{0.5}} + Ah^4 + Bh^6 + Ch^8 + Dh^{10} + Eh^{12} + Fh^{14} + Gh^{16} + ...$$

in which, z is a displacement, along the optical axis L, of the aspherical surface from a vertex of the aspherical surface at a distance h from the optical axis L, c is a reciprocal of the radius of curvature, k is the conic constant, and A, B, C, D, E, F and G and so forth are aspheric coefficients.

Table 2 below shows the coefficients for the aspherical surfaces of the first preferred embodiment of the lens system. More specifically, sixteenth-order aspheric coefficients are selected as the highest-order aspheric coefficients for the aspherical surfaces of the first preferred embodiment, so as to achieve the parameters provided in Table 1.

Table 2

| | First lens (510) | | Second lens (520) | |
|---|---|---|---|---|
| | 1$^{st}$ surface (511) | 2$^{nd}$ surface (512) | 3$^{rd}$ surface (521) | 4$^{th}$ surface (522) |
| k | 0.18 | 40.8 | 10.81 | -438.79 |
| A | 5.01307E-03 | -6.71416E-03 | -6.66848E-02 | -2.87772E-02 |
| B | -9.11542E-03 | -4.42110E-02 | -1.23023E-02 | 1.95654E-02 |
| C | -4.66261E-03 | 9.01705E-02 | 5.31830E-02 | -2.37692E-02 |
| D | 1.19396E-02 | -1.47952E-01 | -6.54202E-02 | 1.00235E-02 |
| E | -6.22948E-03 | 1.89611E-01 | 1.23888E-03 | 2.17491E-03 |
| F | -6.25946E-04 | -2.15432E-01 | 4.94278E-02 | -2.68091E-03 |
| G | 5.67456E-04 | 1.11385E-01 | -3.32726E-02 | 4.66706E-04 |
| | Third lens (530) | | Fourth lens (540) | |
| | 5$^{th}$ surface (531) | 6$^{th}$ surface (532) | 7$^{th}$ surface (541) | 8$^{th}$ surface (542) |
| k | 8.19 | -3.44 | 133.05 | -6.32 |
| A | 3.05878E-02 | -3.44431E-02 | -4.35182E-02 | -3.36232E-02 |
| B | -4.31474E-03 | 1.34124E-02 | 3.75255E-03 | 7.43149E-03 |

(continued)

|  | Third lens (530) | | Fourth lens (540) | |
| --- | --- | --- | --- | --- |
|  | 5th surface (531) | 6th surface (532) | 7th surface (541) | 8th surface (542) |
| C | -5.20548E-03 | -3.25029E-03 | 9.43237E-05 | -1.39199E-03 |
| D | 3.36980E-03 | 1.18720E-03 | 1.98336E-05 | 1.26368E-04 |
| E | 1.10494E-04 | 3.01063E-06 | 5.67586E-07 | -1.58546E-06 |
| F | -3.86087E-04 | -5.27455E-05 | -8.33623E-07 | -5.82698E-07 |
| G | 1.65611E-05 | 4.60757E-06 | 3.56142E-08 | 2.93135E-08 |

Consequently, referring to Figure 2 to Figure 4, the first preferred embodiment which adopts the parameters shown in Table 1 and the coefficients shown in Table 2 may have better performances in distortion, field curvature and aberration.

Referring further again to Figure 1, the lens system of the present satisfies:

$$0.5 < f/TL < 1,$$

in which, f represents a focal length of the lens set 500, and TL represents a distance between the first surface 511 of the first lens 510 and the image side 200 of the lens system along the optical axis L, so as to achieve an optimal imaging effect.

Moreover, the image side 200 of the lens system is provided with an image sensor (not shown) which is used to convert the optical image formed at the image side 200 into an electronic signal. The image sensor may be one of a digital charge-coupled device (CCD) and complementary metal-oxide-semiconductor (CMOS) image sensors. The lens system of the present invention further satisfies:

$$0.5 < TL/Dg < 1,$$

in which, Dg represents a length of a diagonal of the optical image formed on the image side 200 when the lens set 500 has a widest angle of view, so as to achieve the optimal imaging effect.

Optical parameters of the first preferred embodiment of the lens assembly, according to the present invention, are summarized as follows: f=4.71 mm, TL=6. 31 mm, Dg=7.14 mm, f/TL=0.75, and TL/Dg=0.88.

By virtue of the parameters of the first to fourth lenses 510 to 540, and the aforementioned optical parameters of the lens system, the first preferred embodiment may achieve the optimal imaging effect.

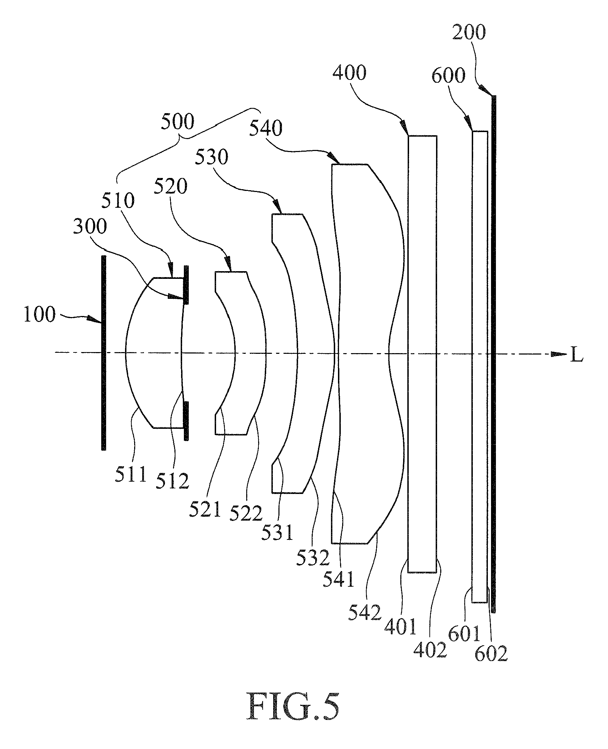

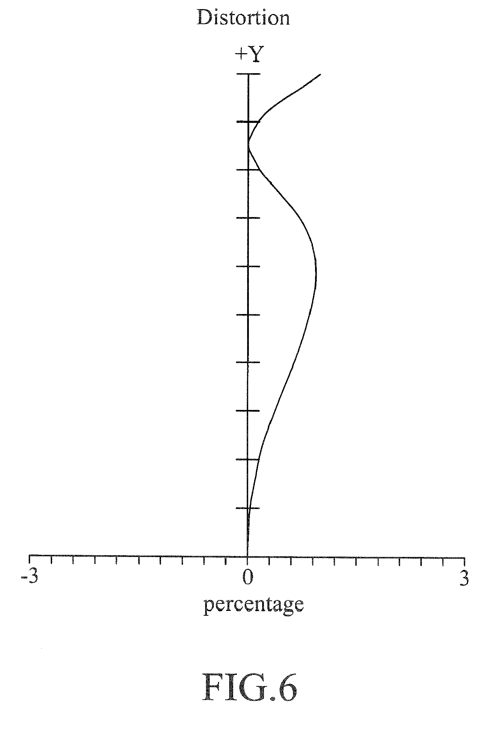

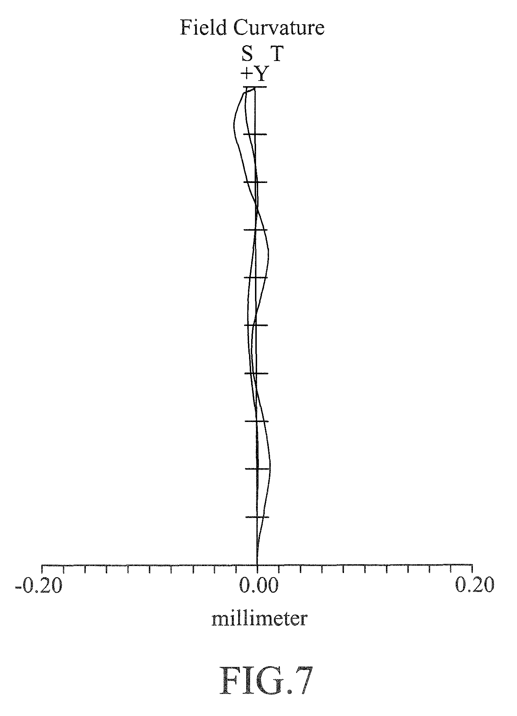

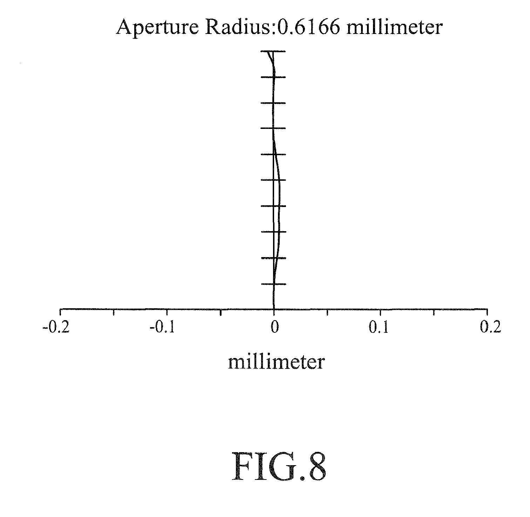

Referring to Figure 5, a schematic diagram of a second preferred embodiment of the lens system according to the present invention is provided. Table 3 below shows parameters of the first to fourth lenses 510 to 540, the filter lens 400 and the C.G. protective lens 600, and relevant performance indexes of the second preferred embodiment of the lens system. Figure 6 illustrates a distortion plot of the second preferred embodiment. Figure 7 illustrates a field curvature plot of the second preferred embodiment. Figure 8 illustrates an aberration plot of the second preferred embodiment.

Table 3

| Lens | Surface | Radius of Curvature | Thickness/ Interspace | Refractive Index | Abbe Number |
|---|---|---|---|---|---|
| First Lens (510) | 1st Surface (511) | 1.16 | 0.55 | 1.534611 | 56.072163 |
| | 2nd Surface (512) | 4.02 | 0.05 | | |
| Second Lens (520) | 3rd Surface (521) | -1.51 | 0.32 | 1.635500 | 23.891420 |
| | 4th Surface | -2.23 | 0.31 | | |

| | | | | | |
|---|---|---|---|---|---|
| | (522) | | | | |
| Third Lens (530) | 5th Surface (531) | -4.66 | 0.37 | 1.534611 | 56.072163 |
| | 6th Surface (531) | -1.30 | 0.03 | | |
| Fourth Lens (540) | 7th Surface (541) | 5.07 | 0.51 | 1.534611 | 56.072163 |
| | 8th Surface (542) | 1.12 | 0.19 | | |
| Filter Lens (400) | 9th Surface (401) | ∞ | 0.30 | 1.516800 | 64.167336 |
| | 10th Surface (401) | ∞ | 0.46 | | |
| C.G. Lens (600) | 11th Surface (601) | ∞ | 0.40 | 1.516800 | 64.167336 |
| | 12th Surface (602) | ∞ | 0.089 | | |

Referring to Table 3 in combination with Figure 5, in the second preferred embodiment of the lens system, the constant-aperture diaphragm 300 is disposed between the second surface 512 of the first lens 510 and the third surface 521 of the second lens 520. A section of the first surface 511 of the first lens 510 adjacent to the optical axis L is a convex surface section, and the section of the second surface 512 of the first lens 510 adjacent to the optical axis L is a concave surface section, such that the portion of the first lens 510 adjacent to the optical axis L has a positive optical power. A section of the third surface 521 of the second lens 520 adjacent to the optical axis L is a concave surface section, and the section of the fourth surface 522 of the second lens 520 adjacent to the optical axis L is a convex surface section, such that the portion of the second lens 520 adjacent to the optical axis L has a negative optical power. The section of the fifth surface 531 of the third lens 530 adjacent to the optical axis L is a concave surface section, and a section of the sixth surface 532 of the third lens 530 adjacent to the optical axis L is a convex surface section, such that the portion of the third lens 530 adjacent to the optical axis L has a positive optical power. The section of the seventh surface 541 of the fourth lens 540 adjacent to the optical axis L is a convex surface section. The eighth surface 542 of the fourth lens 540 has a wavy shape, and the section of the eighth surface 542 of the fourth lens 540 adj acent to the optical axis L is a concave surface section.

Table 4 below shows the coefficients for the aspherical surfaces of the second preferred embodiment of the lens system. More specifically, sixteenth-order aspheric coefficients are selected as the highest-order aspheric coefficients for the aspherical surfaces of the second preferred embodiment, so as to achieve the parameters provided in Table 3.

Table 4

|  | First lens (510) | | Second lens (520) | |
|---|---|---|---|---|
|  | 1st surface (511) | 2nd surface (512) | 3rd surface (521) | 4th surface (522) |
| k | 0.49 | 37.32 | 3.53 | 4.19 |
| A | -3.53595E-02 | -8.49647E-02 | -3.01073E-01 | -3.78921E-01 |
| B | -3.93325E-02 | -3.05538E-01 | 5.17869E-01 | 7.12336E-01 |
| C | 4.76832E-02 | 7.79996E-01 | 3.04050E-02 | -9.67415E-01 |
| D | -6.28181E-01 | -5.54961E+00 | -5.56318E+00 | 8.32263E-01 |
| E | 1.10840E+00 | 2.22597E+01 | 1.38019E+01 | 7.69609E-02 |
| F | -7.32254E-01 | -6.24834E+01 | 1.65235E+01 | 1.49719E+00 |
| G | -3.89687E-01 | 6.16827E+01 | -4.47376E+01 | -1.72519E+00 |
|  | Third lens (530) | | Fourth lens (540) | |
|  | 5th surface (531) | 6th surface (532) | 7th surface (541) | 8th surface (542) |
| k | 12.87 | -10.4 | -13.7 | -9.14 |
| A | -3.62969E-02 | 4.94496E-02 | -1.41670E-01 | -1.13341E-01 |
| B | 4.83035E-02 | 7.04913E-02 | 6.11450E-02 | 4.54754E-02 |
| C | -6.08841E-02 | -1.19842E-01 | -6.78012E-03 | -1.80460E-02 |
| D | -2.01799E-02 | 3.96473E-02 | -1.49710E-03 | 3.14506E-03 |
| E | -6.52893E-03 | 9.08982E-03 | 2.02370E-04 | 4.73630E-05 |
| F | 4.54922E-02 | -7.36256E-03 | 1.05895E-04 | -5.92310E-05 |
| G | -1.39143E-02 | 1.03426E-03 | -2.11900E-05 | 3.42700E-06 |

Consequently, referring to Figure 6 to Figure 8, the second preferred embodiment which adopts the parameters shown in Table 3 and the coefficients shown in Table 4 may have better performances in distortion, field curvature and aberration.

Optical parameters of the second preferred embodiment of the lens assembly, according to the present invention, are summarized as follows: f=3.45 mm, TL=4.07 mm, Dg=5.2 mm, f/TL=0.85, and TL/Dg=0.78.

By virtue of the parameters of the first to fourth lenses 510 to 540, and the aforementioned optical parameters of the lens system, the second preferred embodiment may achieve an optimal imaging effect.

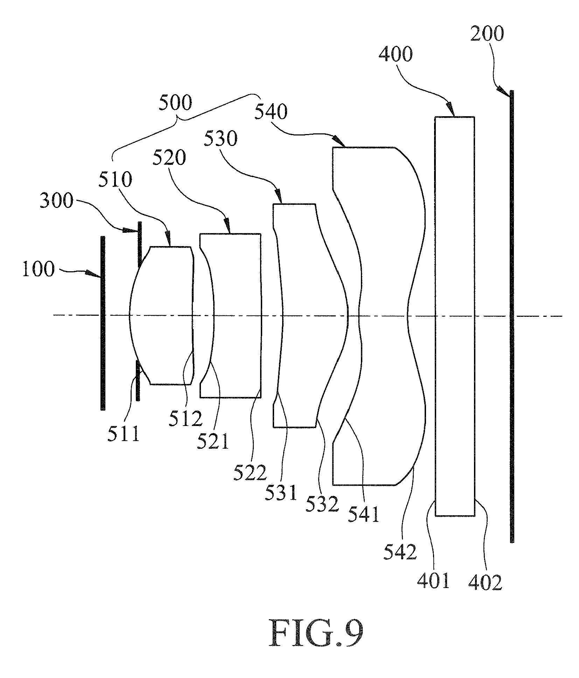

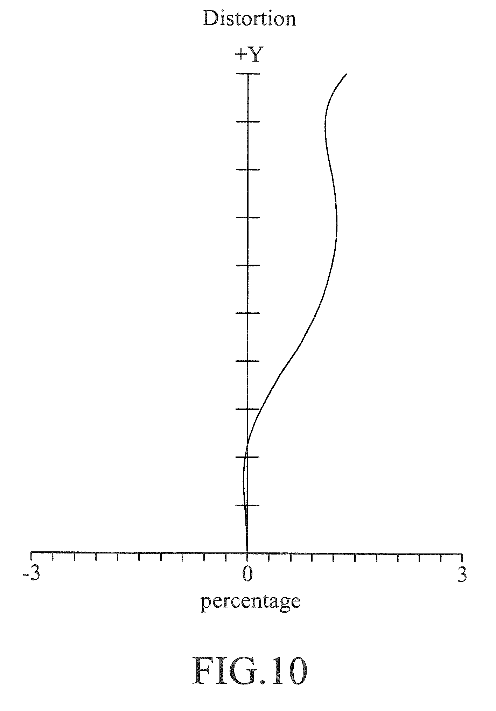

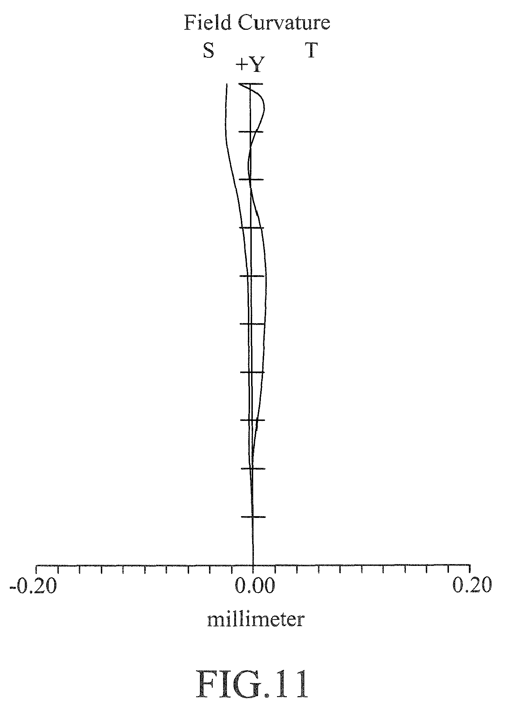

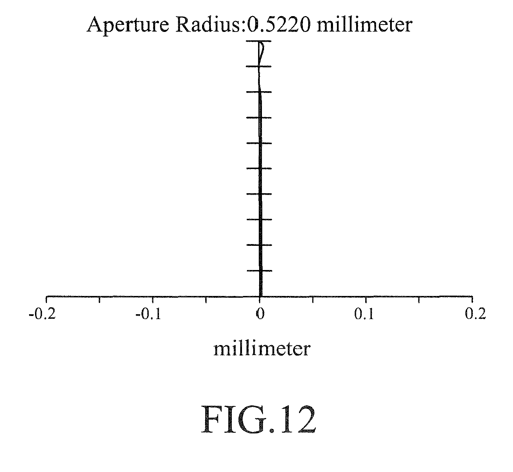

Referring to Figure 9, a schematic diagram of a third preferred embodiment of the lens system according to the present invention is provided. Table 5 below shows parameters of the first to fourth lenses 510 to 540 and the filter lens 400, and relevant performance indexes of the third preferred embodiment of the lens system. Figure 10 illustrates a distortion plot of the third preferred embodiment. Figure 11 illustrates a field curvature plot of the third preferred embodiment. Figure 12 illustrates an aberration plot of the third preferred embodiment. It is noted that the lens system does not comprise the C.G. protective lens 600 in the third preferred embodiment.

Table 5

| Lens | Surface | Radius of Curvature | Thickness/ Interspace | Refractive Index | Abbe Number |
|---|---|---|---|---|---|
| First Lens (510) | 1st Surface (511) | 0.95 | 0.48 | 1.534611 | 56.072163 |
| | 2nd Surface (512) | 7.72 | 0.17 | | |
| Second Lens (520) | 3rd Surface (521) | -2.36 | 0.36 | 1.631920 | 23.415236 |
| | 4th Surface (522) | -5.76 | 0.17 | | |
| Third Lens (530) | 5th Surface (531) | -1.76 | 0.50 | 1.534611 | 56.072163 |
| | 6th Surface (531) | -0.69 | 0.10 | | |
| Fourth Lens (540) | 7th Surface (541) | 8.34 | 0.36 | 1.534611 | 56.072163 |
| | 8th Surface (542) | 0.70 | 0.21 | | |

| Filter Lens (400) | 9th Surface (401) | ∞ | 0.30 | 1.516800 | 64.167336 |
|---|---|---|---|---|---|
| | 10th Surface (401) | ∞ | 0.427 | | |

Referring to Table 5 in combination with Figure 9, in the third preferred embodiment of the lens system, the constant-aperture diaphragm 300 is disposed between the first surface 511 of the first lens 510 and the object side 100. A section of the first surface 511 of the first lens 510 adjacent to the optical axis L is a convex surface section, and the section of the second surface 512 of the first lens 510 adjacent to the optical axis L is a concave surface section, such that the portion of the first lens 510 adjacent to the optical axis L has a positive optical power. A section of the third surface 521 of the second lens 520 adjacent to the optical axis L is a concave surface section, and the section of the fourth surface 522 of the second lens 520 adjacent to the optical axis L is a convex surface section, such that the portion of the second lens 520 adjacent to the optical axis L has a negative optical power. The section of the fifth surface 531 of the third lens 530 adjacent to the optical axis L is a concave surface section, and a section of the sixth surface 532 of the third lens 530 adjacent to the optical axis L is a convex surface section, such that the portion of the third lens 530 adjacent to the optical axis L has a positive optical power. The section of the seventh surface 541 of the fourth lens 540 adjacent to the optical axis L is a convex surface section. The eighth surface 542 of the fourth lens 540 has a wavy shape, and the section of the eighth surface 542 of the fourth lens 540 adjacent to the optical axis L is a concave surface section.

Table 6 below shows the coefficients for the aspherical surfaces of the third preferred embodiment. More specifically, sixteenth-order aspheric coefficients are selected as the highest-order aspheric coefficients for the aspherical surfaces of the third preferred embodiment, so as to achieve the parameters provided in Table 5.

Table 6

| | First lens (510) | | Second lens (520) | |
|---|---|---|---|---|
| | 1st surface (511) | 2nd surface (512) | 3rd surface (521) | 4th surface (522) |
| k | 0.02 | 60.52 | -73.69 | 25.71 |
| A | 0.006686 | 0.01018 | -0.66231 | 0.554379 |
| B | 0.230343 | -1.43534 | 0.796485 | -0.78845 |
| C | -0.40256 | 8.977374 | -7.96239 | -2.98748 |
| D | -7.99235 | -70.3131 | 40.66613 | 9.22181 |
| E | 63.2978 | 297.1864 | -216.96 | 7.11727 |
| F | -185.839 | -732.19 | 605.2154 | -55.4587 |
| G | 178.0738 | 666.068 | -778.956 | 63.27212 |
| | Third lens (530) | | Fourth lens (540) | |
| | 5th surface (531) | 6th surface (532) | 7th surface (541) | 8th surface (542) |
| k | 4.78 | -3.96 | -1253.48 | -7.13 |
| A | 0.946705 | -0.10664 | -0.58595 | -0.37173 |
| B | -0.62203 | 0.518594 | 0.302947 | 0.312721 |
| C | -1.36014 | -0.36988 | 0.071224 | -0.20131 |
| D | 2.854516 | 0.335346 | -0.0029 | 0.065539 |
| E | 0.800868 | -0.08745 | -0.0102 | -0.00301 |
| F | -6.4188 | -0.37317 | -0.0128 | -0.00512 |

(continued)

| | Third lens (530) | | Fourth lens (540) | |
| --- | --- | --- | --- | --- |
| | 5th surface (531) | 6th surface (532) | 7th surface (541) | 8th surface (542) |
| G | 5.59621 | 0.203332 | -0.00277 | 0.001042 |

Consequently, referring to Figure 10 to Figure 12, the third preferred embodiment which adopts the parameters shown in Table 5 and the coefficients shown in Table 6 may have better performances in distortion, field curvature and aberration.

Optical parameters of the third preferred embodiment of the lens assembly, according to the present invention, are summarized as follows: f=2.5 mm, TL=3.07 mm, Dg=3.52 mm, f/TL=0.81, and TL/Dg=0.87.

By virtue of the parameters of the first to fourth lenses 510 to 540, and the aforementioned optical parameters of the lens system, the third preferred embodiment may achieve an optimal imaging effect.

It is noted that even though the sixteenth-order a spheric coefficients are selected as the highest-order aspheric coefficients for the aspherical surfaces of the three preferred embodiments, the highest-order aspheric coefficients are not limited to be sixteenth-order in other configurations of the lens system of the present invention.

While the present invention has been described in connection with what are considered the most practical and preferred embodiments, it is understood that this invention is not limited to the disclosed embodiments but is intended to cover various arrangements included within the spirit and scope of the broadest interpretation so as to encompass all such modifications and equivalent arrangements.

**Claims**

1. A lens system comprising:

   a lens set (500) which includes a first lens (510), a second lens (520), a third lens (530) and a fourth lens (540) arranged in sequence fromanobject side (100) to an image side (200) of said lens system along an optical axis (L) of said lens system and a constant-aperture diaphragm (300) which is disposed between the object side (100) and the image side (200), **characterized in that**:

   said first lens (510) includes a portion which is adjacent to the optical axis (L) and which has a positive optical power, said first lens (510) having a first surface (511) which is a curved surface facing the object side (100), and a second surface (512) which is a curved surface facing the image side (200), a section of said second surface (512) adjacent to the optical axis (L) being a concave surface section;
   said second lens (520) includes a portion which is adjacent to the optical axis (L) and which has a negative optical power, said second lens (520) having a third surface (521) which is a curved surface facing the obj ect side (100), and a fourth surface (522) which is a curved surface facing the image side (200), a section of said fourth surface (522) adjacent to the optical axis (L) being a convex surface section;
   said third lens (530) includes a portion which is adjacent to the optical axis (L) and which has a positive optical power, said third lens (530) having a fifth surface (531) which is a curved surface facing the object side (100), and a sixth surface (532) which is a curved surface facing the image side (200), a section of said fifth surface (531) adjacent to the optical axis (L) being a concave surface section; and
   said fourth lens (540) has a seventh surface (541) which is a curved surface facing the object side (100), and an eighth surface (542) which is a curved surface facing the image side (200), a section of said seventh surface (541) adjacent to the optical axis (L) being a convex surface section, said eighth surface (542) having a wavy shape, a section of said eighth surface (542) adjacent to the optical axis (L) being a concave surface section.

2. The lens system as claimed in Claim 1, **characterized in that** at least one of said first and second surfaces (511 and 512) of said first lens (510) is an aspherical surface, at least one of said third and fourth surfaces (521 and 522) of said second lens (520) is an aspherical surface, at least one of said fifth and sixth surfaces (531 and 532) of said third lens (530) is an aspherical surface, and at least one of said seventh and eighth surfaces (541 and 542) of said fourth lens (540) is an aspherical surface.

3. The lens system as claimed in Claim 1 or 2, **characterized in that** said first surface (511) of said first lens (510) has a section which is adjacent to the optical axis (L) and which is a convex surface section.

4. The lens system as claimed in any one of Claims 1 to 3, **characterized in that** said third surface (521) of said second lens (520) has a section which is adjacent to the optical axis (L) and which is a concave surface section.

5. The lens system as claimed in any one of Claims 1 to 4, **characterized in that** said sixth surface (532) of said third lens (530) has a section which is adjacent to the optical axis (L) and which is a convex surface section.

6. The lens system as claimed in any one of Claims 1 to 5, satisfying:

$$0.5 < f/TL < 1,$$

in which, f represents a focal length of said lens set (500), and TL represents a distance between said first surface (511) of said first lens (510) and the image side (200) of said lens system along the optical axis (L).

7. The lens system as claimed in any one of Claims 1 to 6, satisfying:

$$0.5 < TL/Dg < 1,$$

in which, TL represents a distance between said first surface (511) of said first lens (510) and the image side (200) of said lens system along the optical axis (L), and Dg represents a length of a diagonal of an image formed on the image side (200) when said lens set (500) has a widest angle of view.

8. The lens system as claimed in any one of Claims 1 to 7, further **characterized by** a filter lens (400), said filter lens (400) being a bandpass filter optical lens, and being disposed between the object side (100) and the image side (200) of said lens system.

9. The lens system as claimed in any one of Claims 1 to 7, further **characterized by** a filter lens (400), said filter lens (400) being a bandpass filter optical lens, and being disposed between said eighth surface (542) of said fourth lens (540) and the image side (200) of said lens system.

10. The lens system as claimed in any one of Claims 1 to 9, **characterized in that** said constant-aperture diaphragm (300) is disposed on one of said first to eighth surfaces (511 to 542).

EP 2 894 502 A1

FIG.1

14

FIG.2

Field Curvature

FIG.3

Aperture Radius:0.9775 millimeter

millimeter

FIG.4

FIG.5

Distortion

FIG.6

Field Curvature

FIG.7

Aperture Radius:0.6166 millimeter

millimeter

FIG.8

FIG.9

Distortion

+Y

-3　　　　　　　　0　　　　　　　　3

percentage

# FIG.10

Field Curvature

FIG.11

Aperture Radius:0.5220 millimeter

millimeter

FIG.12

Europäisches
Patentamt

European
Patent Office

Office européen
des brevets

# EUROPEAN SEARCH REPORT

Application Number

EP 14 15 0423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 148 234 A1 (SONY CORP [JP]) 27 January 2010 (2010-01-27) * paragraph [0104] - paragraph [0119]; figures 5,6; example 3; tables 5,6 * * paragraph [0150] - paragraph [0164]; figures 11,12; example 6; tables 11,12 * ----- | 1-10 | INV. G02B13/00 ADD. G02B9/34 G02B13/18 |
| X | EP 1 531 353 A1 (KONICA MINOLTA OPTO INC [JP]) 18 May 2005 (2005-05-18) * paragraph [0077] - paragraph [0079]; figures 13,14; example 7; table 7 * * paragraph [0080] - paragraph [0082]; figures 15,16; example 8; table 8 * ----- | 1-10 | |
| X | US 2005/046970 A1 (AMANAI TAKAHIRO [JP]) 3 March 2005 (2005-03-03) * paragraph [0081] - paragraph [0089]; figures 1,2; example 1 * ----- | 1-10 | |

TECHNICAL FIELDS
SEARCHED (IPC)

G02B

The present search report has been drawn up for all claims

| Place of search | Date of completion of the search | Examiner |
|---|---|---|
| Munich | 23 April 2014 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 15 0423

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2014

| Patent document cited in search report | | Publication date | Patent family member(s) | | Publication date |
|---|---|---|---|---|---|
| EP 2148234 | A1 | 27-01-2010 | CN | 101634740 A | 27-01-2010 |
| | | | EP | 2148234 A1 | 27-01-2010 |
| | | | JP | 4556148 B2 | 06-10-2010 |
| | | | JP | 2010026387 A | 04-02-2010 |
| | | | US | 2010020418 A1 | 28-01-2010 |
| EP 1531353 | A1 | 18-05-2005 | CN | 1864087 A | 15-11-2006 |
| | | | EP | 1531353 A1 | 18-05-2005 |
| | | | EP | 1909130 A1 | 09-04-2008 |
| | | | JP | 4466713 B2 | 26-05-2010 |
| | | | JP | 4561634 B2 | 13-10-2010 |
| | | | JP | 2008033376 A | 14-02-2008 |
| | | | US | 2005105194 A1 | 19-05-2005 |
| | | | WO | 2005047951 A1 | 26-05-2005 |
| US 2005046970 | A1 | 03-03-2005 | NONE | | |

EPO FORM P0459

For more details about this annex : see Official Journal of the European Patent Office, No. 12/82